# EUROPEAN PATENT APPLICATION

(11) **EP 1 839 736 A1**
(43) Date of publication of application: **03.10.2007**
(21) Application number: 07251030.8
(22) Date of filing: 13.03.2007
(51) Int. Cl.: B01J 8/02, B01J 8/04, C01B 3/48, C01B 3/50, H01M 8/00, H01M 8/06

(54) **Hydrogen generator and fuel cell system using the same**

(30) Priority: 31.03.2006 JP 2006100950
(71) Applicant: MIURA CO., LTD., Matsuyama-shi Ehime-ken (JP)
(72) Inventor: Furukawa, Hideo, Matsuyama-shi, Ehime-ken (JP); Tanaka, Osamu, Matsuyama-shi, Ehime-ken (JP); Yasui, Kenji, Matsuyama-shi, Ehime-ken (JP)
(74) Representative: Rees, Alexander Ellison

(57) **Abstract**

Provided is a hydrogen generator which is capable of reducing a size of an entire apparatus and reducing a running cost by utilizing heat of a heat exchanger (1) for hydrogen reforming in a reformer (2), and which can particularly preferably be used in a facility such as a hospital, a restaurant, or a hotel utilizing both steam and electricity, and a fuel cell system using the hydrogen generator. The hydrogen generator includes the reformer (2) for generating hydrogen H₂ from a fuel gas G and steam H₂O incorporated in a fuel gas passage (12) of the heat exchanger (1) provided with a water pipe (13). The hydrogen generator utilizes a part of heat of the heat exchanger (1) for hydrogen reforming performed in the reformer (2). The hydrogen generator includes the reformer (2), a converter (3) for generating hydrogen from carbon monoxide generated in the reformer and steam, and a CO remover (4) for removing a carbon monoxide gas generated in the converter (3) . The reformer (2), the converter (3), and the CO remover (4) are arranged in the flue gas passage (12) of the heat exchanger (1).

## Description

### BACKGROUND OF THE INVENTION

### 1. Field of the Invention

The present invention relates to a hydrogen generator which is favorably used as a hydrogen supply source to a fuel cell to be provided in a hospital, a hotel, or the like utilizing a large volume of steam, and to a fuel cell system using the hydrogen generator.

### 2. Description of the Related Art

Conventionally, there is known a facility having a boiler (heat exchanger) and a fuel cell and provided with a reformer for generating hydrogen from a gas and steam, to thereby supply hydrogen obtained in the reformer to the fuel cell and provide hydrogen for power generation. A part of steam from the boiler is supplied to the reformer and used for hydrogen generation (see JP 06-13093 A).

### SUMMARY OF THE INVENTION

However, the above-mentioned facility has a reformer arranged outside, and thus an entire apparatus has a large size.

The present invention has been made in view of the above, and therefore an object of the present invention is to provide a hydrogen generator which is capable of reducing a size of an entire apparatus and reducing a running cost by utilizing heat of a heat exchanger for hydrogen reforming in a reformer, and which can be used particularly preferably in a facility such as a hospital, a restaurant, or a hotel utilizing both steam and electricity, and a fuel cell system using the hydrogen generator.

In order to solve the above-mentioned problem, a hydrogen generator according to a first aspect of the present invention includes: a heat exchanger provided with a water pipe, wherein the heat exchanger incorporates a reformer for generating hydrogen from a fuel and steam into a flue gas passage thereof.

In the hydrogen generator according to the first aspect of the present invention, the reformer is incorporated in the flue gas passage of the heat exchanger, and a part of heat of the heat exchanger is used as a heat source for generation of hydrogen from a fuel such as a gas and steam in the reformer. Thus, reduction in size of an entire facility can be realized, and reduction in running cost can be realized. The flue gas passage of the heat exchanger has a large temperature distribution from high temperature to low temperature, and the reformer requires an optimum temperature for efficient generation of hydrogen in accordance with the kind of catalyst to be used. Thus, the reformer can be arranged in a temperature region of the heat exchanger providing an optimum temperature for hydrogen reforming. As a result, the reformer allows efficient generation of hydrogen.

A hydrogen generator according a second aspect of the present invention, the reformer includes one of a reforming catalyst and a hydrogen separation membrane.

In the hydrogen generator according to the second aspect of the present invention, a high concentration of hydrogen can be obtained in the reformer.

A hydrogen generator according to a third aspect of the present invention further includes: a converter for generating hydrogen from carbon monoxide generated in the reformer and steam; and a CO remover for removing a carbon monoxide gas generated in the converter, in which the reformer, the converter, and the CO remover are arranged in the flue gas passage of the heat exchanger.

In the hydrogen generator according to the third aspect of the present invention, hydrogen can be obtained efficiently with the reformer, the converter, and the CO remover. That is, the reformer, the converter, and the CO remover have different optimum temperature ranges for efficiently exhibiting functions of respective catalysts to be used, and the reformer, the converter, and the CO remover can respectively be arranged in optimum temperature regions of the heat exchanger. Thus, the reformer, the converter, and the CO remover can exhibit respective functions efficiently, to thereby improve a hydrogen generation rate.

A hydrogen generator according to a fourth aspect of the present invention includes: a converter for generating hydrogen from carbon monoxide generated in the reformer and steam; and a CO remover for removing a carbon monoxide gas generated in the converter, in which the converter and the CO remover are provided downstream of the reformer and outside the flue gas passage of the heat exchanger.

In the hydrogen generator according to the fourth aspect of the present invention, the heat exchanger requires no portion for the converter and the CO remover, and a large volume of steam generated can be assured.

A hydrogen generator according to a fifth aspect of the present invention, downstream of the water pipe of the heat exchanger is connected to upstream of the reformer.

In the hydrogen generator according to the fifth aspect of the present invention, hydrogen can be obtained stably in the reformer.

According to a sixth aspect of the present invention, there is provided a fuel cell system provided with a hydrogen generator, including a fuel cell connected to downstream of the hydrogen generator according to any one of the first to fifth aspects of the present invention.

In the fuel cell system according to the sixth aspect of the present invention, a fuel cell system having a small size as an entire facility and a low running cost can be obtained.

According to a fuel cell system provided with a hydrogen generator according to a seventh aspect of the present invention, a reformed gas from the hydrogen generator is supplied to upstream of the flue gas passage of the heat exchanger.

In the fuel cell system according to the seventh aspect of the present invention, efficient use of energy can be attempted, or NOx generation can be suppressed. That is, in the case where a large amount of hydrogen is present in a reformed gas from the hydrogen generator, efficient use of energy can be attempted. Meanwhile, in the case where a large amount of carbon dioxide is present in the reformed gas, NOx generation can be suppressed.

A fuel cell system provided with a hydrogen generator according to an eighth aspect of the present invention further includes: a detector for detecting a concentration of hydrogen or carbon dioxide in a reformed gas supplied from the hydrogen generator to the fuel cell; and adjustingmeans for adjusting a supply volume of the reformed gas to the upstream of the flue gas passage of the heat exchanger based on a detection result of the detector.

In the fuel cell system according to the eighth aspect of the present invention, efficient use of energy or suppression of NOx generation can be selected in accordance with a state of a fuel in the hydrogen generator.

According to the hydrogen generator and the fuel cell system using the same, a size of an entire apparatus and a running cost can be reduced. Further, the hydrogen generator and the fuel cell system can preferably be used in a facility such as a hospital or a hotel utilizing both steam and electricity.

### BRIEF DESCRIPTION OF THE DRAWINGS

In the accompanying drawings:
FIG. 1 is a piping block diagram showing a fuel cell system provided with a hydrogen generator according to an embodiment of the present invention;
FIG. 2 is a piping block diagram showing a fuel cell system employing a membrane reactor-type reformer according to another embodiment of the present invention;
FIG. 3 is a sectional diagram showing a catalyst device used for a membrane reactor-type reformer;
FIG. 4 is a schematic diagram showing a formation example of a reformer in the case where a cylindrical body is used as a heat exchanger;
FIG. 5 is a schematic diagram showing an example employing the same heat exchanger as that of FIG. 4 and having a reformer provided outside of the cylindrical body;
FIG. 6 is a schematic diagram showing a formation example of a reformer in the case where a rectangular body is used as a heat exchanger;
FIG. 7 is a schematic diagram showing another formation example of the reformer in the case where a rectangular body is used as a heat exchanger;
FIG. 8 is a schematic diagram showing still another formation example of the reformer in the case where a rectangular body is used as a heat exchanger;
FIG. 9 is a graph showing an inside temperature distribution of a rectangular body used as a heat exchanger by section; and
FIG. 10 is a graph showing an inside temperature distribution of a cylindrical body used as a heat exchanger by section.

### DETAILED DESCRIPTION OF THE PREFERRED EMBODIMENTS

Next, embodiments of the present invention will be described.

A hydrogen generator according to each embodiment of the present invention includes a reformer incorporated in a flue gas passage of a heat exchanger provided with a water pipe. A rectangular or cylindrical heat exchanger may be used. The rectangular heat exchanger includes a plurality of water pipes arranged vertically in a flue gas passage of a rectangular body, and a cylindrical heat exchanger includes a plurality of water pipes arranged vertically along a flue gas passage formed in a circumferential direction of a cylindrical body. Heat exchange is conductedbetween water flowing inside each of the water pipes and a flue gas flowing through the flue gas passage, and steam is taken out of the heat exchanger.

The reformer is provided by removing a water pipe provided in the heat exchanger, and inserting a metal pipe, which is different from the water pipe, filled with a hydrogen reforming catalyst. A membrane reactor-type reformer may also be used. The membrane reactor-type reformer may include a tubular hydrogen separation membrane subjected palladium plating or the like on a surface of a porous metal pipe, and the hydrogen separation membrane is inserted into the metal pipe together with the hydrogen reforming catalyst. Alternatively, the membrane reactor-type reformer may include a sheet-like hydrogen separation membrane subjected to palladium plating or the like, opposing a metal sheet, and having the hydrogen reforming catalyst filled between the opposing parts. In this case, the reformer is arranged inside the flue gas passage of the heat exchanger, or arranged outside the flue gas passage and connected to the flue gas passage.

The hydrogen generator preferably includes, in addition to the reformer described above, the converter for generating hydrogen from carbon monoxide generated in the reformer and steam, and the CO remover for removing a carbon monoxide gas generated in the converter. The reformer, the converter, and the CO remover are preferably arranged in the flue gas passage of the heat exchanger.

An example of the hydrogen reforming catalyst to be used for the reformer is NiO(Al₂O₃). Examples of the catalyst to be used in the converter include: Fe₂O₃ and Cr₂O₃; and CuO, ZnO, and Al₂O₃. An example of the catalyst to be used in the CO remover is Ru. A temperature at which NiO(Al₂O₃) most effectively functions is 600 to 800°C, and a temperature at which Fe₂O₃ and Cr₂O₃ most effectively function is 320 to 400°C. A temperature at which CuO, ZnO, and Al₂O₃ most effectively function is 180 to 250°C, and a temperature at which Ru most effectively functions is 150 to 200°C. Meanwhile, the rectangular heat exchanger has a temperature range of about 300 to 1, 500°C, and the cylindrical heat exchanger has a temperature range of about 300 to 1,200°C. The reformer employing NiO(Al₂O₃) as a catalyst is arranged upstream of the flue gas passage of the heat exchanger at a position having a temperature range of 600 to 800°C, and the converter employing Fe₂O₃ and Cr₂O₃ as catalysts is arranged midstream of the flue gas passage at a position having a temperature range of 320 to 400°C. The converter employing CuO, ZnO, and Al₂O₃ as catalysts is arranged at a position having a temperature range of 180 to 250°C, and the CO remover employing Ru as a catalyst is arranged downstream of the flue gas passage at a position having a temperature range of 150 to 200°C.

For use of steam generated in the heat exchanger for hydrogen generation in the reformer, downstream of the water pipe provided in the heat exchanger is connected to upstream of the reformer, to thereby generate hydrogen from a part of steam generated in the heat exchanger and a fuel such as a gas.

A fuel cell is connected to downstream of the hydrogen generator, and hydrogen generated in the hydrogen generator is supplied for power generation in the fuel cell.

A pipe is provided between the fuel cell and the flue gas passage of the heat exchanger for connecting the fuel cell and the flue gas passage. A gas allowed to flow through the fuel cell is supplied to upstream of the flue gas passage through this pipe, to thereby attempt efficient use of energy or suppress NOx generation. That is, in the case where a large amount of hydrogen is present in a gas from the hydrogen generator, efficient use of energy can be attempted, and in the case where a large amount of carbon dioxide is present in the gas, NOx generation can be suppressed. The above-mentioned hydrogen generator can be used for not only the fuel cell but also a semiconductor production device in which a large amount of hydrogen is used, for example.

### Embodiment 1

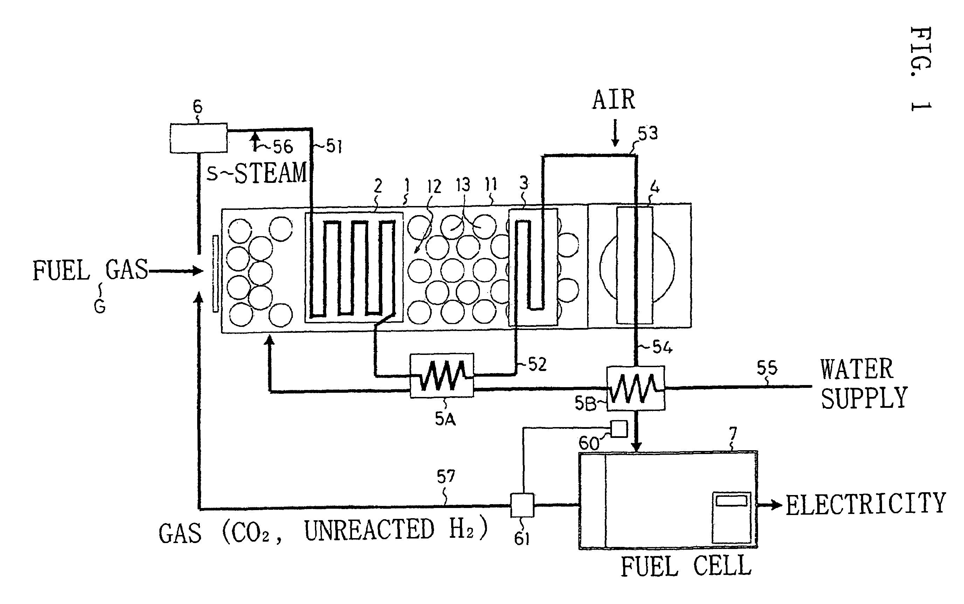

Hereinafter, a specific embodiment of a hydrogen generator according to the present invention will be described based on figures. FIG. 1 is a piping block diagram showing a fuel cell system provided with a hydrogen generator according to the embodiment of the present invention. In the embodiment shown in FIG. 1, a rectangular heat exchanger 1 having a plurality of water pipes 13 arranged in a flue gas passage 12 inside a rectangular body 11 is used, and a reformer 2 is arranged upstream of the flue gas passage 12. A converter 3 is arranged midstream of the flue gas passage 12, and a CO remover 4 is arranged downstream of the flue gas passage 12.

To an inlet side of the reformer 2, a first pipe 51 extending from a supply source of a fuel gas G such as a city gas is connected, and a desulfurizer 6 is provided in the first pipe 51. A second pipe 52 is connected between an outlet side of the reformer 2 and an inlet side of the converter 3. A third pipe 53 is connected between an outlet side of the converter 3 and the CO remover 4, and a fuel cell 7 is connected to an outlet side of the CO remover 4 through a fourth pipe 54. To an inlet side of the heat exchanger 1, a fifth pipe 55 extending from a water supply source is connected. A first heat exchanger 5A is provided in a middle of each of the fifth pipe 55 and the second pipe 52, and a second heat exchanger 5B is provided in a middle of each of the fifth pipe 55 and the fourth pipe 54 such that a reformed gas flowing from the reformer 2 to the converter 3 and a reformed gas flowing from the CO remover 4 to the fuel cell 7 exchange heat with supply water flowing through the fifth pipe 55 in the first heat exchanger 5A and the second heat exchanger 5B to be supplied to the inlet side of the heat exchanger 1. Thus, a heat exchange rate of the heat exchanger 1 can be improved.

A sixth pipe 56 is provided between an outlet side of the heat exchanger 1 and upstream of the first pipe 51 in the reformer 2 such that a part of steam S obtained in the heat exchanger 1 is used for hydrogen generation in the reformer 2. In the embodiment shown in FIG. 1, a gas discharge side of the fuel cell 7 is connected to upstream of the flue gas passage 12 of the heat exchanger 1 through a seventh pipe 57. The gas allowed to flow through the fuel cell 7 is supplied to the heat exchanger 1 and combusted. Thus, in the case where a large amount of hydrogen is present in a gas from the hydrogen generator, efficient use of energy can be attempted, and in the case where a large amount of carbon dioxide is present in the gas, NOx generation can be suppressed. Thus, efficient use of energy can be attempted or NOx generation can be suppressed.

Note that in FIG. 1, the gas discharge side of the fuel cell 7 is connected to the upstream of the flue gas passage 12 of the heat exchanger 1 through the seventh pipe 57 but the gas can be introduced to upstream of the heat exchanger 1 by branching the fourth pipe 54 before the gas enters the fuel cell 7 and connecting the branched fourth pipe 54 to the upstream of the flue gas passage 12 of the heat exchanger 1.

In the above-mentioned fuel cell system, the fuel gas G is supplied and combusted in the fuel gas passage 12 of the heat exchanger 1. The flue gas flowing through the flue gas passage 12 toward the discharge side exchanges heat with water supplied to the water pipe 13 to generate the steam S, and the steam S is taken out of the heat exchanger 1 for a purpose of various operations. A part of the fuel gas G is delivered to the desulfurizer 6 through the first pipe 51, and a sulfur content which is a corroding component mixed in the fuel gas G is removed therefrom in the desulfurizer 6 and delivered to the reformer 2. To the upstream of the first pipe 51 in the reformer 2, the steam S is supplied from the sixth pipe 56, and the steam S and the fuel gas G are delivered to the reformer 2. In the reformer 2, a hydrogen rich gas is generated from the steam S and the fuel gas G with a reforming catalyst such as NiO (Al₂O₃) heated to an optimum temperature with a flue gas flowing through the flue gas passage 12. The hydrogen rich gas is delivered to the converter 3 through the second pipe 52, and CO₂ and H₂O are generated from CO generated in the reformer 2 with catalysts such as Fe₂O₃ and Cr₂O₃, or CuO, ZnO, and Al₂O₃ filled in the converter 3 and heated to an optimum temperature with the flue gas while the hydrogen rich gas flows through the converter 3. The reformed gas is delivered to the CO remover 4 with injected air through the third pipe 53, and unreacted CO is converted into CO₂ with a catalyst such as Ru heated to an optimum temperature with the flue gas. A gas consisting of H₂ and CO₂ is delivered to the fuel cell 7 through the fourth pipe 54, and H₂ is used for power generation in the fuel cell 7.

### Embodiment 2

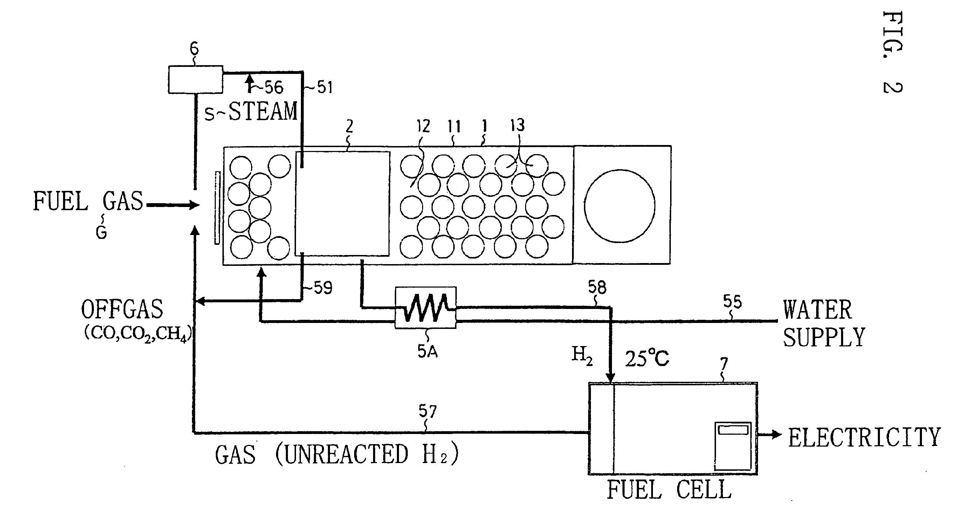

FIG. 2 is a piping block diagram showing another embodiment of the present invention. In the embodiment shown in FIG. 2: a membrane reactor-type reformer 2 is incorporated in the upstream of the heat exchanger 1; the first pipe 51 is connected to the inlet side of the reformer 2; and the outlet side of the reformer 2 is connected to the fuel cell 7 through an eighth pipe 58.

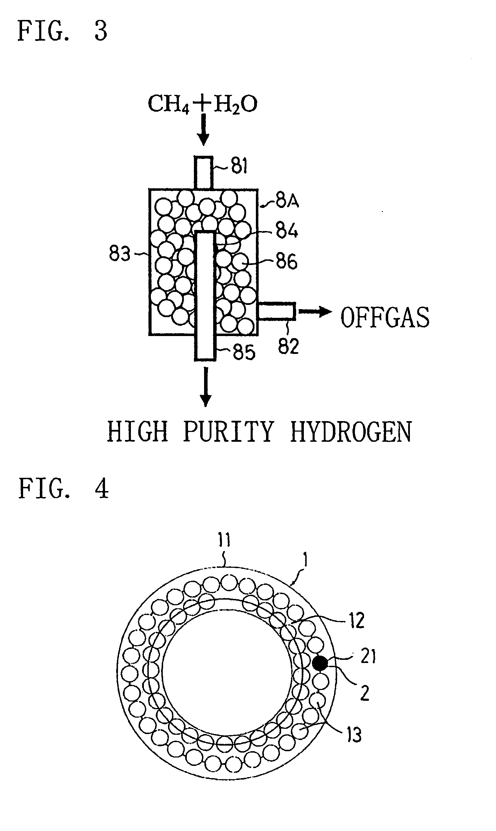

FIG. 3 is a sectional diagram showing a catalyst device used for the membrane reactor-type reformer 2. A catalyst device 8A is formed by: inserting a tubular hydrogen separation membrane 84 subjected to palladium plating or the like on a surface of a porous metal pipe into a cylinder 83 having an inlet 81 in an upper part and an outlet 82 of an offgas in a side of a lower part; projecting downwardly a lower outlet 85 of the hydrogen separation membrane 84 from the; and filling a reforming catalyst 86 such as NiO(Al₂O₃) inside the cylinder 83 such that the reforming catalyst 86 surrounds the hydrogen separation membrane 84. The heat exchanger 1 includes such the catalyst device 8A incorporated in the reformer 2.

As shown in FIG. 3, in the hydrogen generator of this embodiment, CH₄ and H₂O are delivered from the first pipe 51, through the inlet 81 of the catalyst device 8A, and into the cylinder 83, are brought into contact with the reforming catalyst 86 filled inside the cylinder 83, pass through the hydrogen separation membrane 84, and convert into H₂. Thus, H₂ is supplied from the outlet 85 of the catalyst device 8A to the fuel cell 7 through the eighth pipe 58 for power generation. The offgas (CO, CO₂, CH₄) generated in the catalyst device 8A is delivered from the outlet 82 of the catalyst device 8A to downstream of the seventh pipe 57 through a ninth pipe 59, and is supplied to the inlet side of the heat exchanger 1 together with a gas (unreacted H₂) flowing through the seventh pipe 57 and combusted.

FIG. 4 shows a formation example of a reformer in the case where a cylindrical body is used as the heat exchanger 1. In this embodiment, a plurality of water pipes 13 are provided inside a cylindrical body 11 on an inner diameter side and an outer diameter side, and the flue gas passage 12 is formed between the water pipes 13 on the inner diameter side and the outer diameter side. One of the water pipes 13 positioned on the outer diameter side is removed, and the reformer 2 formed of a metal pipe 21, which is different from the water pipe, filled with a hydrogen reforming catalyst is incorporated in this position.

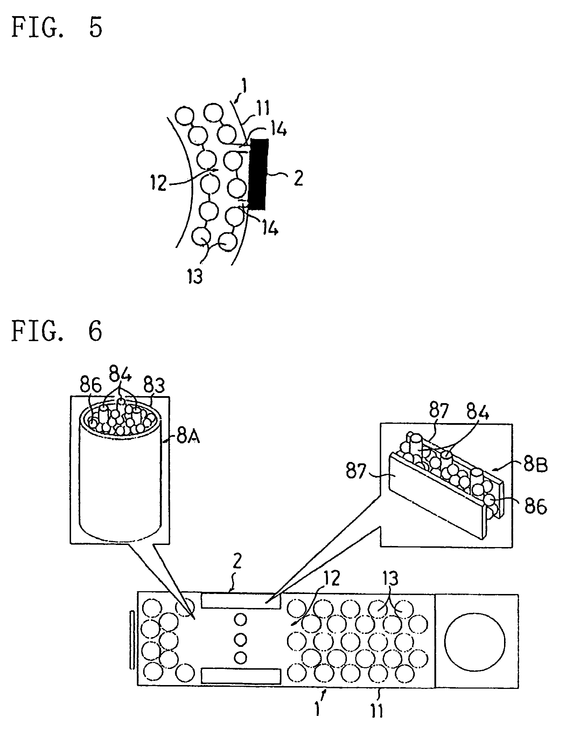

FIG. 5 is a schematic diagram showing an example employing the same heat exchanger as that of FIG. 4 and having the reformer 2 provided outside of the cylindrical body 11. The reformer 2 is connected to the flue gas passage 12 in the cylindrical body 11 through a bypass passage 14.

FIG. 6 is a schematic diagram showing a formation example of the reformer 2 in the case where a rectangular body is used as the heat exchanger 1. In this example, a plurality of water pipes 13 are provided in the fuel gas passage 12 of the rectangular body 11. The reformer 2 includes the catalyst device 8A as shown in FIG 3 in which a plurality of tubular hydrogen separation membranes 84 are inserted in the cylinder 83, and a plurality of catalyst devices 8A are arranged in a width direction of the rectangular body 11 and in an upstream region of the flue gas passages 12. On both sides of the width direction, different catalyst devices 8B in which a plurality of tubular hydrogen separation membranes 84 are inserted between metal sheets 87 opposing each other, and a hydrogen reforming catalyst 86 such as NiO(Al₂O₃) is filled between the metal sheets 87 such that the hydrogen reforming catalyst 86 surrounds the tubular hydrogen separation membranes 84 are provided such that hydrogen is generated in two catalyst devices 8A and 8B. Alternatively, one of the catalyst devices 8A and 8B may be used.

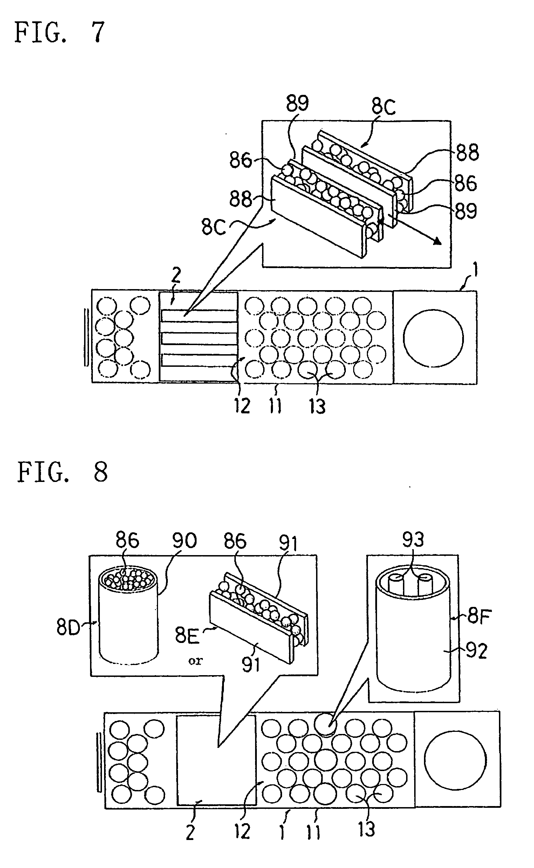

FIG. 7 is a schematic diagram showing another formation example of the reformer 2 in the case where a rectangular body is used as the heat exchanger 1. This example employs a catalyst device 8C in which a metal sheet 88 and a sheet-like hydrogen separation membrane 89 subjected to palladium plating or like on a surface of a porous metal pipe are arranged so as to oppose each other, and the hydrogen separation catalyst 86 is filled between the opposing parts. A plurality of pairs of two catalyst devices 8C arranged such that respective hydrogen separation membranes 89 oppose each other are arranged in a width direction and in an upstream region of the heat exchanger 1. In the case where such the catalyst devices 8C are used, hydrogen passes through sheet-like hydrogen separation membranes 89 opposing each other and is guided out through a passage formed between the hydrogen separation membranes 89 in the catalyst devices 8C. The hydrogen separation membranes 89 may be formed into a corrugated shape to increase a surface area, to thereby increase a hydrogen generation rate.

FIG. 8 is a schematic diagram showing still another formation example of the reformer 2 in the case where a rectangular body is used as a heat exchanger 1. In this example, a catalyst device 8D having the hydrogen reforming catalyst 86 such as NiO(Al₂O₃) simply filled inside a metal pipe 90, or a catalyst device 8E having the hydrogen reforming catalyst 86 filled between metal sheets 91 opposing each other is arranged in an upstream region of the heat exchanger 1. Further, a catalyst device 8F having a plurality of tubular hydrogen separation membranes 93 inserted inside a metal pipe 92 is arranged in a midstream region of the heat exchanger 1, in addition to the catalyst devices 8D and 8E. In this example, hydrogen is generated due to the catalyst device 8D or 8E, and the catalyst device 8F.

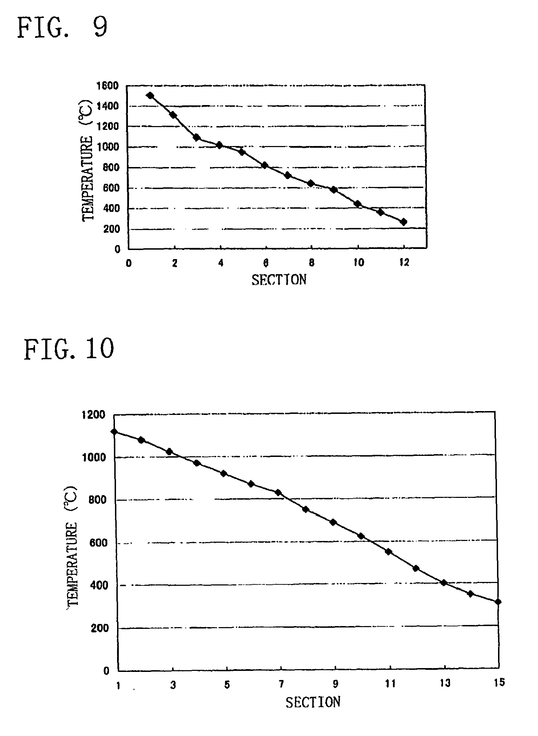

FIG. 9 is a graph showing an inside temperature distribution of a rectangular body serving as a heat exchanger by section, and FIG. 10 is a graph showing an inside temperature distribution of a cylindrical body serving as a heat exchanger by section. The figures show results of temperature measurement of the flue gas passage in the heat exchanger divided into a plurality of sections from the inlet to the outlet. As the figures show, the rectangular heat exchanger has a temperature range of about 300 to 1,500°C, and the cylindrical heat exchanger has a temperature range of about 300 to 1, 200 °C. NiO(Al₂O₃) to be used as a hydrogen reforming catalyst in the reformer 2 most effectively functions in a temperature range of 600 to 800°C, and Fe₂O₃ and Cr₂O₃ to be used as catalysts in the converter 3 most effectively function in a temperature range of 320 to 400°C. CuO, ZnO, and Al₂O₃ to be used as catalysts in the converter 3 most effectively function in a temperature range of 180 to 250°C, and Ru to be used as a catalyst in the CO remover 4 most effectively functions in a temperature range of 150 to 200°C.

Thus, in the fuel cell system as shown in FIG. 1, the reformer 2 employing NiO (Al₂O₃) as a catalyst is arranged in an upstream region of the flue gas passage 12 of the heat exchanger 1 at a position having a temperature of about 700°C. The converter 3 employing CuO, ZnO, and Al₂O₃ as catalysts is arranged in a midstream region of the flue gas passage 12 at a position having a temperature of about 250°C, and the converter 3 employing Fe₂O₃ and Cr₂O₃ as catalysts is arranged in a midstream region of the flue gas passage 12 at a position having a temperature of about 350°C. The CO remover 4 employing Ru as a catalyst is arranged in a downstream region of the flue gas passage 12 at a position having a temperature of about 200°C. Those allow the catalysts arranged at respective positions to exhibit respective catalytic abilities efficiently, to thereby improve a hydrogen generation rate. The hydrogen separation membrane most effectively functions at a temperature of about 550°C, and thus the hydrogen separation membrane is arranged in a midstream region of the flue gas passage 12 of the heat exchanger 1 at a position having a temperature of about 550°C.

In the embodiment shown in FIG. 1, the fourth pipe 54 from the CO remover 4 to the fuel cell 7 is provided with a detector 60 such as a sensor for detecting a concentration of hydrogen or carbon dioxide in a gas flowing through the fourth pipe 54. Further, the seventh pipe 57 is provided with adjusting means 61 for adjusting a gas supply volume from the seventh pipe 57 to the flue gas passage 12 of the heat exchanger 1 based on a detection result of the detector 60.

According to the structure described above, the concentration of hydrogen or carbon dioxide in the gas from the CO remover 4 of the hydrogen generator to the fuel cell 7 is detected by the detector 60, and the gas supply volume to the heat exchanger 1 through the seventh pipe 57 is adjusted by the adjusting means 61 based on the detection result. In this way, in accordance with a state of a fuel in the hydrogen generator, in the case where a large amount of hydrogen is present in the gas from the hydrogen generator, excess hydrogen is supplied to the upstream of the heat exchanger 1 through the seventh pipe 57 for attempting efficient use of energy. Meanwhile, in the case where a large amount of carbon dioxide is present, an NOx amount can be reduced.

## Claims

1. A hydrogen generator comprising a heat exchanger provided with a water pipe, wherein the heat exchanger incorporates a reformer for generating hydrogen from a fuel and steam into a flue gas passage thereof.

2. A hydrogen generator according to claim 1, wherein the reformer comprises one of a reforming catalyst and a hydrogen separation membrane.

3. A hydrogen generator according to claim 1 or 2, further comprising: a converter for generating hydrogen from carbon monoxide generated in the reformer and steam; and a CO remover for removing a carbon monoxide gas generated in the converter, wherein the reformer, the converter, and the CO remover are arranged in the flue gas passage of the heat exchanger.

4. A hydrogen generator according to claim 1 or 2, further comprising: a converter for generating hydrogen from carbon monoxide generated in the reformer and steam; and a CO remover for removing a carbon monoxide gas generated in the converter, wherein the converter and the CO remover are provided downstream of the reformer and outside the flue gas passage of the heat exchanger.

5. A hydrogen generator according to any one of claims 1 to 4, wherein downstream of the water pipe of the heat exchanger is connected to upstream of the reformer.

6. A fuel cell system provided with a hydrogen generator, comprising a fuel cell connected to downstream of the hydrogen generator according to any one of claims 1 to 5.

7. A fuel cell system provided with a hydrogen generator according to claim 6, wherein a reformed gas from the hydrogen generator is supplied to upstream of the flue gas passage of the heat exchanger.

8. A fuel cell system provided with a hydrogen generator according to claim 6, further comprising: a detector for detecting a concentration of hydrogen or carbon dioxide in a reformed gas supplied from the hydrogen generator to the fuel cell; and adjusting means for adjusting a supply volume of the reformed gas to the upstream of the flue gas passage of the heat exchanger based on a detection result of the detector.
